# DEMANDE DE BREVET EUROPEEN

(11) **EP 3 395 603 A1**
(43) Date de publication de la demande: **31.10.2018**
(21) Numéro de dépôt: 18169046.2
(22) Date de dépôt: 24.04.2018
(51) Int. Cl.: B60L 5/30, B60L 5/38, B60L 11/18

(54) **FROTTEUR DE CAPTATION DE COURANT À RÉTRACTION RAPIDE**

(30) Priorité: 25.04.2017 FR 1753588
(71) Demandeur: ALSTOM Transport Technologies, 93400 Saint-Ouen (FR)
(72) Inventeur: DUPRAT, Patrick, 93340 Le Raincy (FR); FORMENTI, Leonardo, 23891 Barzano (LC) (IT)
(74) Mandataire: Lavoix

(57) **Abrégé**

L'invention concerne un frotteur (10) de captation de courant sur une piste d'alimentation électrique pour véhicule ferroviaire électrique, le frotteur (10) comprenant :
- un patin (12) d'alimentation déplaçable entre une position rétractée et une position déployée ;
- un actionneur (11) propre à déplacer le patin entre les positions rétractée et déployée ; et
- un système mécanique (13) reliant le patin à l'actionneur ;
caractérisé en ce que l'actionneur (11) :
- a une vitesse de mouvement telle qu'il est apte à déplacer le patin (12) entre ses positions rétractée et déployée dans un laps de temps inférieur ou égal à 1 seconde, et de préférence inférieur ou égal à 0,5 secondes ; et
- a un nombre de cycles d'opération avant défaillance supérieur ou égal à 2 500 000.

## Description

La présente invention concerne un frotteur de captation de courant sur une piste d'alimentation électrique pour véhicule ferroviaire électrique, comprenant un patin propre à être mis en contact glissant avec la dite piste d'alimentation, ce patin étant déplaçable entre une position rétractée et une position déployée, un actionneur propre à déplacer le patin entre les positions rétractée et déployée et un système mécanique reliant le patin à l'actionneur afin de convertir un mouvement de l'actionneur en un déplacement du patin.

Un tel frotteur est connu et intégré dans les tramways Citadis de la demanderesse circulant dans la ville de Bordeaux. Il comporte un patin. Le patin peut être rétracté et déployé à l'aide d'un vérin électrique. A cet effet, le vérin électrique agit sur un système mécanique composé de bras formant un parallélogramme.

Ce frotteur est conçu pour un réseau ferroviaire ayant une alimentation électrique principalement aérienne par caténaire interrompue par quelques tronçons d'alimentation par le sol. Lors de l'opération du tramway, un déploiement ou une rétraction du frotteur n'intervient que ponctuellement lorsque le tramway est en arrêt à une station et passe d'un tronçon du réseau à alimentation aérienne à un tronçon d'alimentation par le sol ou vice-versa.

Un tel frotteur n'est pas adapté pour un véhicule ferroviaire tel qu'un tramway qui circule sur un réseau où le tramway doit constamment alterner entre une alimentation par le sol et une autre alimentation telle qu'une alimentation autonome par batterie embarquée.

Un but de l'invention est donc de réaliser un frotteur pour un véhicule ferroviaire à alimentation électrique alternant fréquemment, notamment en pleine course, entre une alimentation par le sol et une autre alimentation, notamment autonome.

Selon l'invention, ce but est atteint avec le frotteur tel que défini ci-dessus, dans lequel l'actionneur a une vitesse de mouvement telle qu'il est apte à déplacer le patin entre ses positions rétractée et déployée dans un laps de temps inférieur ou égal à 1 seconde, de préférence inférieur ou égal à 0,5 secondes, et a un nombre de cycles d'opération avant défaillance supérieur ou égal à 2 500 000.

En remplaçant l'ancien vérin électrique par un actionneur performant à vitesse de mouvement élevée, le patin du frotteur se déplace très rapidement entre ses deux positions. Ainsi, un changement de mode d'alimentation électrique est possible de manière dynamique. Le patin peut être déployé ou rétracté même lorsque le véhicule ferroviaire se déplace à sa vitesse maximale.

Selon l'invention, l'actionneur du frotteur a un nombre de cycles d'opération avant défaillance élevé. Par conséquent, le frotteur supporte bien un grand nombre de rétraction et de déploiement du patin durant la course du véhicule ferroviaire.

Selon des modes de réalisation préférés, le frotteur selon l'invention comprend l'une, plusieurs ou toutes les caractéristiques suivantes, selon toutes les combinaisons techniquement possibles :
- L'actionneur comprend un moteur électrique, de préférence sans balais ;
- Le frotteur comprend une antenne de réception par radio d'un ordre de déplacement du patin ;
- L'antenne est agencée dans le patin ;
- Le système mécanique comprend un ensemble d'éléments de transformation d'un mouvement horizontal d'un membre d'actionnement de l'actionneur en un mouvement vertical du patin ;
- L'ensemble d'éléments de transformation comprend au moins un cylindre à piston ; et
- Chaque cylindre à piston comporte un ressort de sollicitation du patin vers sa position déployée.

L'invention concerne en outre un véhicule ferroviaire, notamment tramway, comprenant au moins un frotteur ayant une vitesse de mouvement telle qu'il est apte à déplacer le patin entre ses positions rétractée et déployée dans un laps de temps inférieur ou égal à 1 seconde, de préférence inférieur ou égal à 0,5 secondes, et ayant un nombre de cycles d'opération avant défaillance supérieur ou égal à 2 500 000.

L'invention concerne également un véhicule ferroviaire, notamment un tramway, comprenant au moins un frotteur tel que défini ci-dessus.

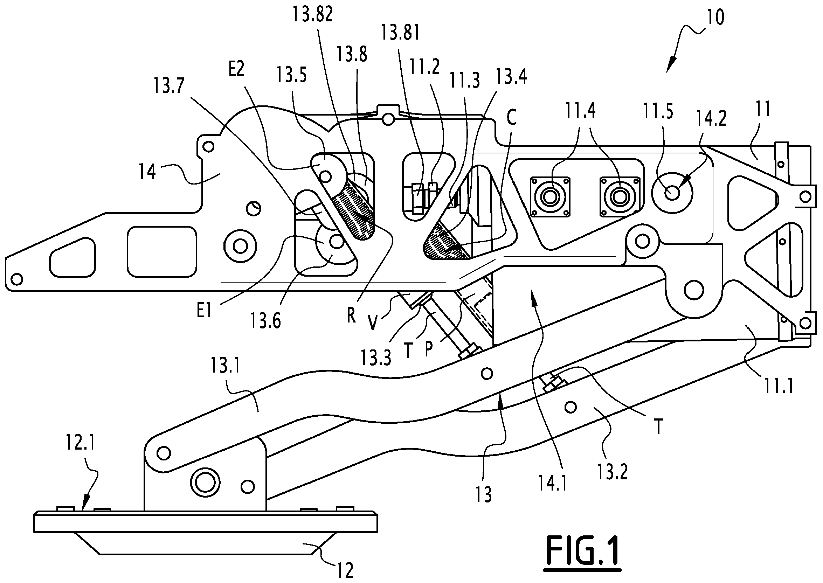

Un mode de réalisation de l'invention va maintenant être décrit en détail en référence à la figure unique qui représente une vue de côté d'un frotteur selon l'invention.

Le frotteur de captation de courant 10 est montré à l'état déployé. Il comprend un actionneur 11, un patin de captation de courant 12, un système mécanique 13 reliant cinématiquement l'actionneur 11 au patin 12, ainsi qu'un cadre 14 portant l'actionneur 11, le patin 12 et le système mécanique 13.

Le système mécanique 13 comprend des premier et deuxième leviers 13.1 et 13.2 de déploiement, des premier et deuxième cylindres à piston 13.3 et 13.4, des premier et deuxième supports 13.5 et 13.6 des cylindres 13.3 et 13.4, une fourche de transmission 13.7, et une broche d'entraînement 13.8. Dans un mode de réalisation, le système mécanique 13 est composé de ces éléments. Il s'agit là d'un ensemble d'éléments de transformation d'un mouvement horizontal d'un membre d'actionnement 11.2 de l'actionneur 11 en un mouvement vertical du patin 12.

L'actionneur 11 comprend un carter 11.1. Une tige (ou membre) d'actionnement 11.2 est montée coulissante dans une ouverture 11.3 de l'actionneur 11. L'actionneur 11 dispose en outre de plusieurs entrées 11.4 servant à l'alimentation et au contrôle électriques. L'actionneur 11 est propre à déplacer le patin 12 entre une position rétractée et une position déployée montrée dans la figure.

L'actionneur 11 a une vitesse de mouvement telle qu'il est apte à déplacer le patin 12 entre ses positions rétractée et déployée dans un laps de temps inférieur ou égal à 1 seconde, et de préférence inférieur ou égal à 0,5 secondes. On entend par vitesse de mouvement de l'actionneur 11 la vitesse à laquelle la tige d'actionnement 11.2 se déplace entre sa position étendue et retirée.

En outre, l'actionneur 11 a un nombre de cycles d'opération avant défaillance supérieur ou égal à 2 500 000. On entend par un cycle d'opération une montée et descente du patin 12.

A cet effet, l'actionneur 11 comprend de préférence un moteur électrique, notamment sans balais. Les moteurs électriques sans balais ont un temps de réaction court, sont fiables et peuvent être contrôlés par une unité de contrôle.

Un mécanisme à l'intérieur du carter 11.1 transforme un mouvement de rotation du moteur électrique en un mouvement de translation de la tige d'actionnement 11.2.

L'actionneur 11 est agencé au sein d'un espace interne 14.1 du cadre 14. Plus précisément, l'actionneur 11 dispose de deux tourillons 11.5 placés dans des paliers 14.2 du cadre 14.

La tige d'actionnement 11.2 est reliée à une première extrémité 13.81 de la broche d'entraînement 13.8. L'autre extrémité 13.82 de la broche d'entraînement 13.8 est montée pivotante entre deux bras de la fourche de transmission 13.7. La fourche de transmission 13.7 se situe entre les deux supports de cylindre 13.5 et 13.6. Elle est reliée à ceux-ci afin de les faire pivoter par rapport au cadre 14 entre une position basse (patin 12 déployé) et une position haute (patin 12 rétracté). La position basse est illustrée dans la figure.

L'une des extrémités E1 des supports de cylindre 13.5 et 13.6 est montée pivotante sur le cadre 14. L'autre extrémité E2 accueille, de manière pivotante, les têtes des cylindres 13.3 et 13.4.

Chaque cylindre à piston 13.3 et 13.4 a une chambre cylindrique C formée par une enveloppe V et accueillant un ressort de compression R. Chaque ressort R agit entre une tête de cylindre et le piston P d'un cylindre à piston 13.3, 13.4. Les tiges T des pistons P sont reliées de manière pivotante aux leviers de déploiement 13.1 et 13.2.

Une extrémité des leviers de déploiement 13.1 et 13.2 est solidarisée de façon pivotante au cadre 14. L'autre extrémité est attachée de manière pivotante au patin 12.

De préférence, le patin 12 accueille une antenne 12.1 de réception par radio d'un ordre de déplacement du patin.

Le déploiement et la rétraction du patin 12 s'effectuent comme suit.

Afin de rétracter le patin 12 en position non active, en partant de la position déployée montrée à la figure, on met en route l'actionneur 11. Cela fait coulisser la tige d'actionnement 11.2 vers l'extérieur hors du carter 11.1. Ce déplacement est relayé à la fourche de transmission 13.7 par l'intermédiaire de la broche d'entraînement 13.8. La fourche de transmission 13.7 fait pivoter les supports de cylindre 13.5 et 13.6 vers l'arrière et vers le haut dans la figure. Par conséquent, les leviers 13.1 et 13.2 sont tirés vers le haut par les tiges T des cylindres à piston 13.3 et 13.4. De cette façon, le patin 12 est escamoté.

Afin de déployer le patin 12 en position de prise de courant, l'actionneur 11 est à nouveau activé. Cette fois ci, la tige d'actionnement 11.2 se retire vers l'intérieur du carter 11.1. Les composants du système mécanique 13 font alors les mouvements inverses, déployant ainsi le patin 12. On notera que, quand le patin 12 arrive en butée sur une piste d'alimentation lors de son déploiement, le retrait de la tige d'actionnement 11.2 se poursuit. De cette façon, les pistons P remontent à l'intérieur des enveloppes V et compriment les ressorts R. Les ressorts R comprimés sollicitent alors le patin 12 vers sa position déployée et donc vers la piste d'alimentation en courant. Cette sollicitation empêche une perte de contact entre le patin 12 et la piste d'alimentation.

Il est possible de prévoir une unité de contrôle permettant de contrôler le comportement de l'actionneur 11, et notamment sa vitesse de mouvement.

## Revendications

1. Frotteur (10) de captation de courant sur une piste d'alimentation électrique pour véhicule ferroviaire électrique, le frotteur (10) comprenant :
- un patin (12) propre à être mis en contact glissant avec la dite piste d'alimentation, ledit patin étant déplaçable entre une position rétractée et une position déployée ;
- un actionneur (11) propre à déplacer le patin entre les positions rétractée et déployée ; et
- un système mécanique (13) reliant le patin à l'actionneur afin de convertir un mouvement de l'actionneur en un déplacement du patin ;
**caractérisé en ce que** l'actionneur (11) :
- a une vitesse de mouvement telle qu'il est apte à déplacer le patin (12) entre ses positions rétractée et déployée dans un laps de temps inférieur ou égal à 1 seconde, et de préférence inférieur ou égal à 0,5 secondes ; et
- a un nombre de cycles d'opération avant défaillance supérieur ou égal à 2 500 000.

2. Frotteur (10) selon la revendication 1, dans lequel l'actionneur (11) comprend un moteur électrique, de préférence sans balais.

3. Frotteur (10) selon l'une quelconque des revendications précédentes, comprenant en outre une antenne (12.1) de réception par radio d'un ordre de déplacement du patin.

4. Frotteur (10) selon la revendication 3, dans lequel l'antenne (12.1) est agencée dans le patin (12).

5. Frotteur (10) selon l'une quelconque des revendications précédentes, dans lequel le système mécanique (13) comprend un ensemble d'éléments (13.1 à 13.8) de transformation d'un mouvement horizontal d'un membre d'actionnement (11.2) de l'actionneur (11) en un mouvement vertical du patin (12).

6. Frotteur (10) selon la revendication 5, dans lequel ledit ensemble comprend au moins un cylindre à piston (13.4).

7. Frotteur (10) selon la revendication 6, dans lequel chaque cylindre à piston (13.3, 13.4) comporte un ressort (R) de sollicitation du patin (12) vers sa position déployée.

8. Véhicule ferroviaire, notamment tramway, comprenant au moins un frotteur (10) selon l'une quelconque des revendications précédentes.
